Europäisches Patentamt

European Patent Office

Office européen des brevets

(19)

(11) Veröffentlichungsnummer : **0 233 893**
**B1**

(12) **EUROPÄISCHE PATENTSCHRIFT**

(45) Veröffentlichungstag der Patentschrift :
20.09.89

(21) Anmeldenummer : 86904070.9

(22) Anmeldetag : 28.07.86

(86) Internationale Anmeldenummer :
PCT/CH 86/00108

(87) Internationale Veröffentlichungsnummer :
WO/8701382 (12.03.87 Gazette 87/06)

(51) Int. Cl.⁴ : **C 09 J   5/00**, **B 32 B  31/08**,
**B 32 B  31/28**

(54) VERFAHREN UND VORRICHTUNG ZUM KASCHIEREN EINER FOLIE MIT EINER MATERIALBAHN.

(30) Priorität : 03.09.85 CH 3792/85

(43) Veröffentlichungstag der Anmeldung :
02.09.87 Patentblatt 87/36

(45) Bekanntmachung des Hinweises auf die Patenterteilung : 20.09.89 Patentblatt·89/38

(84) Benannte Vertragsstaaten :
CH DE FR GB IT LI

(56) Entgegenhaltungen :
DE–A– 2 414 614
FR–A– 2 379 591
GB–A– 2 065 690

(73) Patentinhaber : ULRICH STEINEMANN AG
Schoretshuebstrasse 25
CH-9015 St. Gallen (CH)

(72) Erfinder : LOHSE, Walter
Bachwiesstrasse 6
CH-9100 Herisau (CH)

(74) Vertreter : Wenger, René et al
Hepp & Partner AG Marktgasse 18
CH-9500 Wil (CH)

## Beschreibung

Die Erfindung bezieht sich auf ein Verfahren gemäss dem Oberbegriff von Anspruch 1 sowie auf eine Vorrichtung gemäss dem Oberbegriff von Anspruch 5. Es ist bereits bekannt, zum Kaschieren von Laminaten polymerisierbare Bindemittel einzusetzen, welche mittels UV-Strahlen gehärtet werden. Derartige Laminate werden insbesondere in der graphischen Industrie und in der Verpackungsbranche immer häufiger verwendet. So kann beispielsweise eine Materialbahn aus Papier oder Karton durch Kaschieren mit einer Folie aus einem anderen Material veredelt werden. Ein derartiges Verfahren zum Veredeln eines bedruckten Trägermaterials ist durch die DE-A-28 17 917 bekannt geworden.

Ein Problem bei bekannten Kaschierverfahren besteht darin, dass das lösungsmittelfreie Bindemittel erst unter der Einwirkung der Polymerisation zu kleben beginnt, sodass das Bindemittel im Kaschierwerk praktisch noch keine Klebewirkung entfaltet. Dies wirkt sich besonders nachteilig aus, wenn die Materialbahn beispielsweise in der Form einzelner Bogen dem Kaschierwerk zugeführt wird. Wegen der noch geringen Klebetendenz des Bindemittels im Kaschierwerk können sich die Bogen auf der Folie während des Transports seitlich verschieben.

Es besteht ausserdem die Gefahr, dass das dünnflüssige Bindemittel bei dem geringen Auftragsgewicht bei der Zusammenführung von Folie und Materialbahn im Kaschierwerk weggepresst oder auch zu tief in die Materialbahn aufgesogen wird, sodass nur ein Teil des Bindemittels wirksam wird. In der DE-A-24 14 614 wurde zwar bereits auf die Möglichkeit hingewiesen, bei einem Laminat, dessen Bindung durch Photopolymerisation eines äthylenisch ungesättigten Materials herbeigeführt wird, vor dem Aufbringen der Deckschicht das Bindemittel partiell zu polymerisieren. Das Verfahren betrifft jedoch ein Laminat mit zumindest einer steifen Komponente, die mit einer Glaslamelle verbunden ist. Dünne Druckträger aus Papier oder Karton lassen sich nach diesem Verfahren nicht rationell veredeln.

Es ist daher eine Aufgabe der Erfindung, das Verfahren und die Vorrichtung der eingangs genannten Art derart zu verbessern, dass der eigentliche Kaschiervorgang im Kaschierwerk optimiert werden kann. Es soll bereits im Kaschierwerk eine ausreichende Haftung gewährleistet werden, um ein Verschieben der einzelnen Laminatbahnen zu verhindern. Ausserdem soll die Trocknungszone verkürzt werden, wodurch die Konstruktion der Maschine wesentlich verbessert werden kann. Es soll auch ein Wegschlagen oder Wegdrücken des Bindemittels im Kaschierwerk vermieden werden. Diese Aufgabe wird in verfahrensmässiger Hinsicht mit einem Verfahren mit den Merkmalen von Anspruch 1 und in vorrichtungsmässiger Hinsicht mit einer Vorrichtung mit den Merkmalen von Anspruch 5 gelöst.

Durch diese Vorpolymerisation findet bereits eine Gelierung des Bindemittels statt, bevor die beiden, das Laminat bildenden Bahnen einander berühren. Mit der Gelierung setzt auch die Klebewirkung bereits ein, so dass schon beim erstmaligen Berühren der beiden Bahnen eine gegenseitige Haftung gewährleistet ist. Dies ist besonders vorteilhaft, wenn die Materialbahn in der Form einzelner Bogen dem Kaschierwerk zugeführt wird. Die Bogen kleben so bereits beim erstmaligen Berühren mit der Folie und können beim Weitertransport nicht mehr verschoben werden. Da der Trocknungsvorgang bereits vor dem Kaschierwerk einsetzt, kann die Strecke, auf der nach dem Kaschierwerk endgültig polymerisiert wird, relativ kurz gehalten werden. Dies hat ersichtlicherweise konstruktive Vorteile.

Durch die Vorpolymerisation wird die Viskosität des Bindemittels derart verändert, dass es auf der Trägerbahn haftet und im Kaschierwerk nicht weggedrückt werden kann.

Die Vorpolymerisation ist erfindungsgemäss in Abhängigkeit von der Durchlaufgeschwindigkeit von Folie und Materialbahn steuerbar. So kann bei verschiedenen Durchlaufgeschwindigkeiten jeweils der gleiche Gelierungsgrad des Bindemittels an der Vorpolymerisierstation erreicht werden.

Die Vorpolymerisation und die endgültige Trocknung erfolgen mittels UV-Strahlern.

Besonders effizient erfolgt die Vorpolymerisation bei einer Bestrahlung von der beschichteten Seite her. Für die endgültige Trocknung wird nachher durch die strahlendurchlässige Folie hindurch bestrahlt.

Um den Grad der gewünschten Vorpolymerisation einstellen zu können, wird die Vorpolymerisierstation vorzugsweise mit einem UV-Strahler bestückt, welcher derart steuerbar ist, dass die in der Ebene der Bindemittelbeschichtung wirksame Energie und/oder die Grösse der bestrahlten Fläche veränderbar sind. Da die Energiezufuhr bei UV-Lampen nicht beliebig gedrosselt werden kann, kann die Reduzierung der wirksamen Energie pro Flächeneinheit in der Beschichtungsebene beispielsweise auch durch Entfernen des Strahlers von der Beschichtungsebene erfolgen. Denkbar ist aber auch ein Abblenden des Strahlers und zwar entweder mit Hilfe von Filtern oder durch Querschnittsreduktion des Strahlenbündels.

Auf einfache Weise kann eine Steuerung der Vorpolymerisierung durch Verschwenken der UV-Strahler erfolgen. So können beispielsweise bei einem kurzen Betriebsstillstand die Strahler ganz weggeschwenkt werden, um eine Ueberhitzung in der Bestrahlungsebene zu vermeiden.

Ein Ausführungsbeispiel der Erfindung ist in den Zeichnungen dargestellt und wird nachstehend genauer beschrieben. Es zeigen :

Figur 1 eine erfindungsgemässe Kaschieranlage,

Figur 2 eine Draufsicht auf die Anlage gemäss Figur 1, und

Figur 3 ein Detail der Vorpolymerisierstation in stark vereinfachter Darstellung.

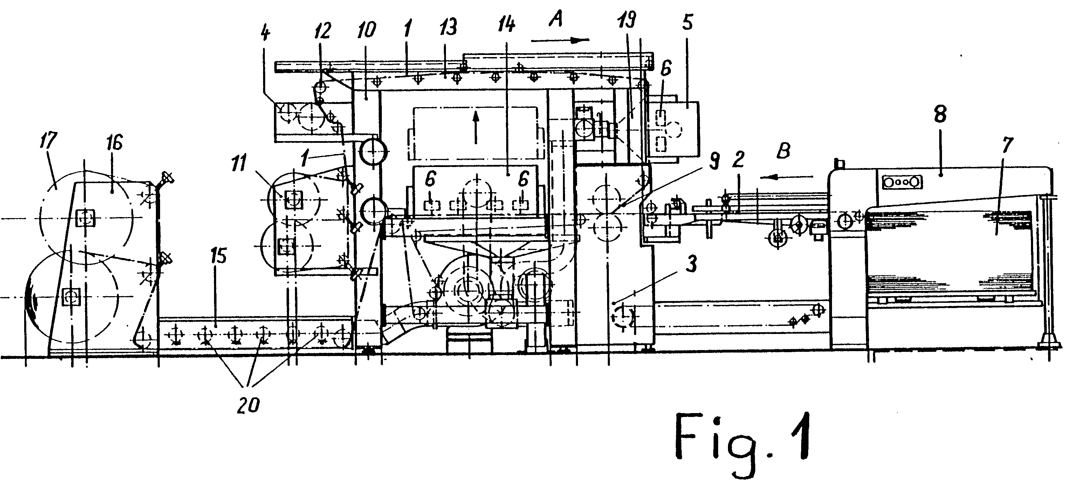

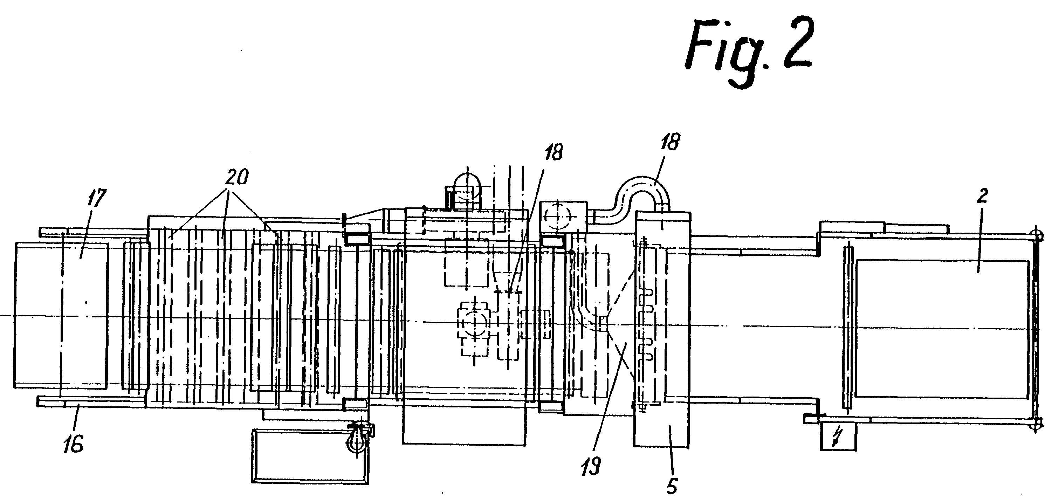

Gemäss den Figuren 1 und 2 besteht das Kaschierwerk aus einem Maschinenständer 10, an dem teilweise offen, teilweise verschalt das Kaschierwerk 3, die Vorpolymerisierstation 5, das Auftragswerk 4 und die Trocknungsstation 14 untergebracht sind. Die Folie 1 wird von einer Folienrolle 11 abgezogen und wird zuerst durch das Auftragswerk 4 geführt, wo sie mit Hilfe von Walzen mit dem Bindemittel beschichtet wird. Ueber eine Umlenkrolle 12 wird die Folie anschliessend durch die Verlaufzone 13 geführt. In dieser Verlaufzone erfolgt eine möglichst gleichmässige Verteilung des Bindemittels unter der Einwirkung der Schwerkraft.

Nach der Verlaufzone 13 wird die Folie 1 zuerst in vertikaler Lage an der Vorpolymerisierstation 5 vorbeigeführt. Diese ist mit zwei UV-Strahlern 6 bestückt. Wie insbesondere aus Figur 2 ersichtlich ist, erstreckt sich diese Station mit den Strahlern über die gesamte Breite der Folienbahn. Ueber eine Kühlluftzufuhr 18 wird Frischluft zur Kühlung der Strahler zugeführt. Die erwärmte Luft und das von den Strahlern erzeugte Ozongas wird über die Absauganlage 19 abgesaugt.

Nach der Vorpolymerisierstation 5 wird die Folie 1 dem Kaschierwerk 3 zugeführt, wo sie mit Hilfe der Kalanderwalzen 9 gegen die Materialbahn 2 gepresst wird. Im vorliegenden Ausführungsbeispiel besteht die Materialbahn aus einzelnen Bogen, beispielsweise aus Papier oder Halbkarton, welche mit Hilfe des Bogenanlegers 8 einem Stapel 7 entnommen und dem Kaschierwerk zugeführt werden. Die Funktionsweise derartiger Bogenanleger ist dem Fachmann insbesondere aus der graphischen Branche bereits bekannt und wird daher hier nicht näher beschrieben.

Auch das Kaschierwerk 3 weist eine an sich bekannte Bauweise auf und verfügt über eine Hydraulik für das Zusammenpressen der Kalanderwalzen 9. Das zusammengepresste Laminat bestehend aus Folie 1 und Materialbahn 2 gelangt nach dem Kaschierwerk 3 in die Trocknungsstation 14. Dort sind unmittelbar über der Vorschubebene des Laminats vier weitere UV-Strahler 6 angeordnet. Auch diese Station ist mit einer Kühlluftzufuhr 18 und mit einer Absauganlage 19 ausgerüstet.

Nach dem Verlassen der Trocknungsstation 14 muss das erwärmte Laminat abgekühlt werden, was in der Kühlzone 15 erfolgt. Dort wird aus quer zur Vorschubrichtung angeordneten Kühlluftrohren 20 Kühlluft auf das Laminat geblasen. Das Laminat wird schliesslich auf der Aufrollvorrichtung 16 zu Laminatrollen 17 aufgerollt.

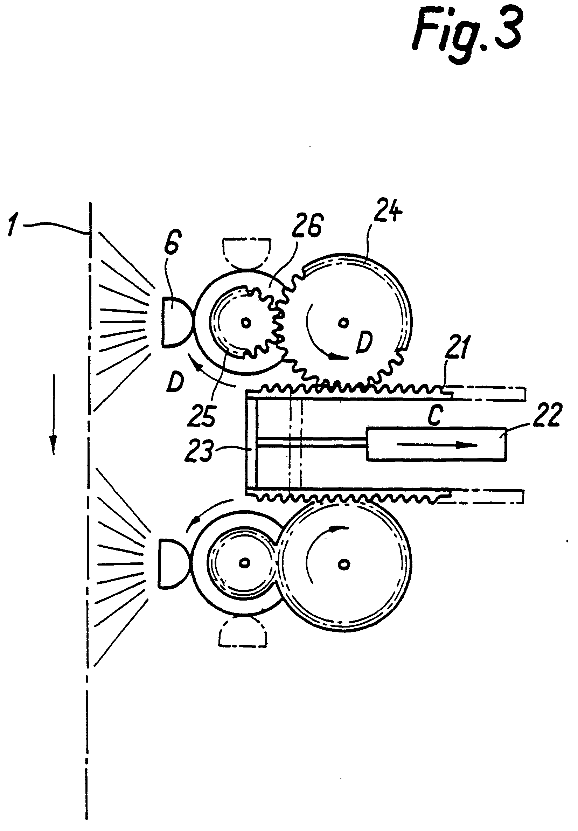

Figur 3 zeigt stark vereinfacht eine Möglichkeit für die Steuerung der Vorpolymerisierstation. Die beiden UV-Strahler 6 sind in einer Ebene in einem bestimmten Abstand von der Folie 1 an je einer drehbaren Haltescheibe 26 befestigt. Soll der Gelierungsgrad, bzw. die Intensität der Polymerisation reduziert werden, werden die beiden Strahler 6 in einer gegenläufigen Drehbewegung weggeschwenkt. Dies erfolgt über das Zahnstangenpaar 21, dessen Zahnstangen über ein Verbindungsjoch 23 miteinander verbunden sind. In jede Zahnstange greift ein erstes Zahnrad 24, welches mit einem zweiten Zahnrad 25 kämmt, welches auf der Achse der Haltescheibe 26 angeordnet ist. Für das Verschieben der Zahnstangen 21 dient beispielsweise ein Druckmittelzylinder 22, dessen Kolben mit dem Verbindungsjoch 23 verbunden ist.

Sollen die Strahler beispielsweise um 90° in die strichpunktierte Position verschwenkt werden, bewegt der Druckmittelzylinder 22 die Zahnstangen 21 in Pfeilrichtung C. Dabei drehen sich ersichtlicherweise die Zahnräder 24 und 25 in Pfeilrichtung D, wobei die Strahler 6 auf den Haltescheiben 26 weggeschwenkt werden. Je nach dem Grad der Schwenkbewegung kann die Intensität der Polymerisation beeinflusst werden. Die Steuerung kann derart mit der Antriebsvorrichtung für die Folie gekoppelt sein, dass bei einem Stillstand der Folie 1 ein sofortiges Wegschwenken um 90° erfolgt, um ein Verbrennen der Folie 1 zu verhindern. Für kurze Betriebsunterbrüche ist dies vorteilhafter als die UV-Strahler abzuschalten, da heisse Lampen nach dem Abschalten nicht sofort wieder gezündet werden können. Dies trifft vor allem bei Mitteldruckquecksilber-Strahlern zu. Selbstverständlich wäre auch ein Abblenden der Lampen beispielsweise mit sog. Shutters möglich.

Anstelle einzelner Bogen könnte die Materialbahn 2 ebenfalls von einer Rolle abgezogen werden. Die Folie 1 ist vorzugsweise eine Klarsichtfolie, da an der Trocknungsstation 14 durch die Folie hindurch polymerisiert werden muss. Es genügt aber auch, wenn die Folie nur teilweise für das Strahlenspektrum der gängigen UV-Lampen durchlässig ist. Gegebenenfalls kann die Anzahl der Strahler an der Trocknungsstation erhöht werden.

## Patentansprüche

1. Verfahren zum Kaschieren einer wenigstens teilweise strahlungsdurchlässigen Folie (1) mit einer Materialbahn (2) unter Verwendung eines UV-polymerisierbaren Bindemittels, wobei die Folie von einer Rolle abgezogen und mit dem Bindemittel beschichtet wird und anschliessend in einem Kaschierwerk (3) gegen die Materialbahn gepresst wird, dadurch gekennzeichnet, dass das Bindemittel nach dem Auftragen, aber noch vor dem Zusammenpressen von Folie (1) und Materialbahn (2) im Kaschierwerk (3) vorpolymerisiert wird, wobei die Vorpolymerisation in Abhängigkeit von der Durchlaufgeschwindigkeit der Folie dadurch steuerbar ist, dass die in der Ebene der Bindemittelbeschichtung wirksame Energie und/oder die Grösse der bestrahlten Fläche verändert wird, und dass das Bindemittel nach dem Austreten des aus Folie und Materialbahn gebildeten Laminats aus dem Kaschierwerk (3) durch weitere Polymerisation durch die Folie hindurch endgültig ausgehärtet wird.

2. Verfahren nach Anspruch 1, dadurch gekennzeichnet, dass die Folie in der Vorpolymerisierstation von der beschichteten Seite her mit UV-Strahlen beaufschlagt wird.

3. Verfahren nach Anspruch 1 oder 2, dadurch gekennzeichnet, dass die Materialbahn aus einzelnen Bogen besteht, welche einem Stapel entnommen und dem Kaschierwerk zugeführt werden.

4. Verfahren nach Anspruch 1 oder 2, dadurch gekennzeichnet, dass die Folie in vertikaler Lage an einer Vorpolymerisierstation (5) vorbeigeführt wird.

5. Vorrichtung zum Kaschieren einer wenigstens teilweise strahlungsdurchlässigen Folie (1) mit einer Materialbahn (2) unter Verwendung eines UV-polymerisierbaren Bindemittels, wobei die Folie von einer Rolle abziehbar und in einem Auftragswerk (4) mit einem Bindemittel beschichtbar ist, mit einem Kaschierwerk (3) zum Zusammenpressen von Folie und Materialbahn, dadurch gekennzeichnet, dass im Bereich der Vorschubbahn der Folie zwischen dem Auftragswerk (4) und dem Kaschierwerk (3) eine Vorpolymerisierstation (5) angeordnet ist, dessen UV-Strahler derart steuerbar ist, dass die in der Ebene der Bindemittelbeschichtung wirksame Energie und/ oder die Grösse der bestrahlten Fläche veränderbar ist.

6. Vorrichtung nach Anspruch 5, dadurch gekennzeichnet, dass die Vorpolymerisierstation (5) einen verschwenkbaren UV-Strahler (6) aufweist.

7. Vorrichtung nach Anspruch 6, dadurch gekennzeichnet, dass die Vorpolymerisierstation (5) zwei UV-Strahler (6) aufweist, welche in einer gegenläufigen Drehrichtung verschwenkbar gelagert sind.

8. Vorrichtung nach einem der Ansprüche 5 bis 7, dadurch gekennzeichnet, dass an der Vorpolymerisierstation Umlenkrollen derart angeordnet sind, dass die Folie vertikal an der Vorpolymerisierstation vorbeiführbar ist.

## Claims

1. A process for laminating an at least partially radiation-transmissive foil (1) with a web of material (2) using a UV-polymerisable bonding agent, wherein the foil is drawn from a roll and coated with the bonding agent and then pressed against the web of material in a laminating mechanism (3) characterised in that the bonding agent is subjected to pre-polymerisation after being applied but before the foil (1) and the web of material (2) are pressed together in the laminating mechanism (3), wherein the pre-polymerisation operation is controllable in dependence on the speed of movement of the foil in that the energy which is operative in the plane of the coating of bonding agent and/or the size of the irradiated surface is varied, and that, after the laminate formed from the foil and the web of material issues from the laminating mechanism, the bonding agent is definitively hardened by further polymerisation through the foil.

2. A process according to claim 1 characterised in that the foil is subjected to UV-rays in the pre-polymerisation station from the coated side.

3. A process according to claim 1 or claim 2 characterised in that the web of material comprises individual sheets which are taken from a stack and fed to the laminating mechanism.

4. A process according to claim 1 or claim 2 characterised in that the foil is moved past a pre-polymerisation station (5) in a vertical position.

5. Apparatus for laminating an at least partially radiation-transmissive foil (1) with a web of material (2) using a UV-polymerisable bonding agent, wherein the foil can be drawn from a roll and coated with a bonding agent in an applicator mechanism (4), comprising a laminating mechanism (3) for pressing the foil and the web of material together, characterised in that a pre-polymerisation station (5) is arranged in the region of the path of forward feed movement of the foil between the applicator mechanism (4) and the laminating mechanism (3), the UV-radiation means of the pre-polymerisation station being controllable in such a way that the energy which is operative in the plane of the coating of bonding agent and/or the size of the irradiated surface is variable.

6. Apparatus according to claim 5 characterised in that the pre-polymerisation station (5) has a pivotable UV-radiation means (6).

7. Apparatus according to claim 6 characterised in that the pre-polymerisation station (5) has two UV-radiation means (6) wich are mounted pivotably in opposite directions of rotation.

8. Apparatus according to one of claims 5 to 7 characterised in that direction-changing rollers are arranged at the pre-polymerisation station in such a way that the foil can be moved vertically past the pre-polymerisation station.

## Revendications

1. Procédé pour contre-coller une pellicule (1) au moins partiellement transparente aux rayonnements avec une bande de matière (2) en utilisant un liant polymérisable par UV, dans lequel la pellicule est tirée à partir d'un rouleau et est enduite du liant, puis est pressée contre la bande de matière dans un dispositif de contre-collage (3), caractérisé en ce que le liant est pré-polymérisé après l'application, mais avant le pressage de la pellicule (1) et de la bande de matière (2) l'une contre l'autre dans le dispositif de contre-collage (3), la pré-polymérisation pouvant être réglée en fonction de la vitesse de défilement de la pellicule par le fait que l'on fait varier l'énergie qui est effective dans le plan de l'enduction de liant et/ou la grandeur de la surface irradiée, et en ce que le liant est durci définitivement par une nouvelle polymérisation à travers la pellicule après la sortie du stratifié formé de la pellicule et de la bande de matière hors du dispositif de contre-collage (3).

2. Procédé selon la revendication 1, caractérisé en ce que la pellicule est irradiée par des rayons UV du côté enduit, dans le poste de pré-polymérisation.

3. Procédé selon la revendication 1 ou 2, caractérisé en ce que la bande de matière se compose de feuilles individuelles, qui sont prélevées à partir d'une pile et qui sont amenées au dispositif de contre-collage.

4. Procédé selon la revendication 1 ou 2, caractérisé en ce que l'on fait passer la pellicule en position verticale sur un poste de pré-polymérisation (5).

5. Dispositif pour contre-coller une pellicule (1) au moins partiellement transparente aux rayonnements avec une bande de matière (2), avec utilisation d'un liant polymérisable par UV, dans lequel la pellicule peut être tirée à partir d'un rouleau et enduite d'un liant dans un dispositif applicateur (4), comprenant un dispositif de contre-collage (3) destiné à presser la pellicule et la bande de matière l'une contre l'autre, caractérisé par le fait que, dans la région du parcours d'avance de la pellicule, qui est comprise entre le dispositif applicateur (4) et le dispositif de contre-collage (3), est agencé un poste de pré-polymérisation (5) dont l'émetteur d'UV peut être réglé de manière à permettre de faire varier l'énergie qui est effective dans le plan de l'enduction de liant et/ou la grandeur de la surface irradiée.

6. Dispositif selon la revendication 5, caractérisé en ce que le poste de pré-polymérisation (5) comprend un émetteur d'UV (6) orientable.

7. Dispositif selon la revendication 6, caractérisé en ce que le poste de pré-polymérisation (5) comprend deux émetteurs d'UV (6) qui sont montés orientables dans des sens de rotation opposés.

8. Dispositif selon l'une des revendications 5 à 7, caractérisé en ce que, sur le poste de pré-polymérisation, sont agencées des poulies de renvoi, de telle sorte que l'on puisse faire passer la pellicule verticalement sur le poste de pré-polymérisation.

Fig. 1

EP 0 233 893 B1

Fig. 2

EP 0 233 893 B1

# Fig.3